# EUROPÄISCHE PATENTSCHRIFT

(11) **EP 3 928 909 B1**
(45) Veröffentlichungstag und Bekanntmachung des Hinweises auf die Patenterteilung: **22.07.2026**
(21) Anmeldenummer: 21189187.4
(22) Anmeldetag: 30.01.2017
(51) Int. Cl.: B23K 9/20, B23K 11/00, B23K 11/16, B23K 20/12, B23K 35/02, F16B 37/06

(54) **SCHWEISSELEMENT UND SCHWEISSVERFAHREN ZUM VERBINDEN EINES SCHWEISSELEMENTS MIT EINEM WERKSTÜCK**
WELDING ELEMENT AND WELDING METHOD FOR CONNECTING A WELDING ELEMENT WITH A WORKPIECE
ÉLÉMENT DE SOUDAGE ET PROCÉDÉ DE SOUDAGE PERMETTANT DE RELIER UN ÉLÉMENT DE SOUDAGE À UNE PIÈCE

(43) Veröffentlichungstag der Anmeldung: 29.12.2021
(62) Teilanmeldung aus: 17153807.7
(73) Patentinhaber: Newfrey LLC, New Britain, CT 06053 (US)
(72) Erfinder: Eissara, Bah, 35394 Gießen (DE)
(74) Vertreter: SBD IPAdmin

(56) Entgegenhaltungen:
- EP-A2- 1 060 822
- DE-A1- 102013 225 048
- JP-A- H0 523 857
- US-A1- 2005 111 932

## Beschreibung

### Gebiet der Erfindung

Die vorliegende Erfindung betrifft ein Schweißelement, insbesondere einen Schweißbolzen, welches geeignet ist unter Verwendung eines Schweißverfahrens mit einem Werkstück verbunden zu werden, mit einem Kopf mit einer Schweißoberfläche und einer zu der Schweißoberfläche abgewandten Haltoberfläche und einem schaftförmigen Ankerabschnitt, welcher sich zwischen einem ersten Endbereich und einem zweiten Endbereich entlang einer Längsachse erstreckt, wobei der erste Endbereich mit der Haltoberfläche verbunden ist.

Ferner betrifft die Erfindung ein Schweißverfahren zum Verbinden eines entsprechenden Schweißelements mit einem Werkstück.

### Hintergrund der Erfindung

Insbesondere im Karosseriebau ist es bekannt, Schweißelemente zu verwenden, um Bauteile und Komponenten anzubringen. Hierfür werden vorwiegend Schweißbolzen verwendet, die in bekannter Weise, beispielsweise durch Bolzenschweißtechnik, an einer Konstruktion befestigt werden. Für das Anbringen derartiger Schweißelemente stehen verschiedene Schweißtechniken zur Verfügung, etwa das Lichtbogenbolzenschweißen. Das Lichtbogenbolzenschweißverfahren gehört zu den Lichtbogenpressschweißverfahren und dient zur dauerhaften Verbindung eines Elementes, wie beispielsweise eines Schweißbolzens, eines Stiftes, einer Buchse, eines Hakens oder einer Öse mit einem entsprechenden größeren Bauteil, wie beispielsweise einem Karosserieblech, einem Gehäuse oder einem Werkstück oder Vergleichbarem. Der Kopf des Schweißelements wird auf einem Werkstück oder Bauteil angeordnet und dann geschweißt.

Bei der Verbindung des Schweißelements bzw. des Schweißbolzens mit der Werkstückoberfläche ist dabei zu beachten, dass eine gleichmäßige Anschmelzung und damit eine ebenfalls gleichmäßige Verschweißung stattfinden.

Das Dokument DE2227384A1 offenbart ein Befestigungselement mit einem Kopf und einem mit dem Kopf verbundenen schaftförmigen Ankerabschnitt. Das Befestigungselement weist an seiner mit dem Bauteil zu verbindenden Fläche eine Anzahl von symmetrisch um den Mittelpunkt dieser Fläche angeordneten und sternförmig von ihm ausgehenden Erhöhungen auf. DE102013225048A1 zeigt einen weiteren bekannten Stand der Technik.

In vielen Bereichen der Technik haben sich aus gewichtssparenden Gründen Aluminiumlegierungen als Werkstoffe durchgesetzt und/oder haben sich hoch- oder höchstfeste Karosseriebleche mit bis zu 1500 MPa Zugfestigkeit und verschiedenen Blechstärken (dünne sowie dicke Blechstärke) als Werkstoffe durchgesetzt, beispielsweise bei Leichtbaukarosserien für Automobile, aber auch im anderen Industriebereichen. Die Festigkeit der Bleche und die verschiedenen Blechstärken sind von der Funktion des Karosseriebauteils abhängig. Die unterschiedliche Festigkeit ist problematisch, da nicht die gleichen Schweißelemente für jede Blechstärke benutzt werden können.

Es ist daher die Aufgabe der vorliegenden Erfindung, die voranstehend beschriebenen Nachteile bei einem Schweißelement und einem Schweißverfahren zum Verbinden des Schweißelements mit einem Werkstück zumindest teilweise zu beheben. Insbesondere ist es die Aufgabe der vorliegenden Erfindung, ein Schweißelement und ein Schweißverfahren zur Verfügung zu stellen, mittels deren auf eine einfache und kostengünstige Art und Weise ein vorteilhaft dauerhaftes Verbinden eines Schweißelements mit einem Werkstück ermöglicht wird, bei welchem eine bessere Flexibilität, sowie eine geringe Durchschweißgefahr des Bleches entsteht, wobei die Festigkeit der Schweißverbindung im Vergleich zu bekannten Schweißelementen und Schweißverfahren vornehmlich gleichbleibend ist und bevorzugt sogar gesteigert werden kann.

### Zusammenfassung der Erfindung

Die oben genannte Aufgabe wird gelöst durch einen Schweißbolzen mit den Merkmalen des Patentanspruchs 1 und durch einen Schweißverfahren mit den Merkmalen des Patentanspruchs 8.

Ein solches Schweißelement, welches geeignet ist, unter Verwendung eines Schweißverfahrens mit einem Werkstück verbunden zu werden, weist einen Kopf mit einer Schweißoberfläche und einer zu der Schweißoberfläche abgewandten Haltoberfläche und einen schaftförmige Ankerabschnitt auf, welcher sich zwischen einem ersten Endbereich und einem zweiten Endbereich entlang einer Längsachse erstreckt, wobei der erste Endbereich mit der Haltoberfläche verbunden ist, dadurch gekennzeichnet, dass die Schweißoberfläche mehrere regelmäßig auf die gesamte Schweißoberfläche verteilte spitzförmige Vorsprünge aufweist.

Unter dem Begriff "spitzförmig" soll eine Form verstanden werden, die einen scharfen oder runden Zipfel oder ein scharfes oder rundes Eck ausbildet.

Mittels dieser Schweißoberflächengeometrie kann eine Schweißkennlinie an dünne sowie dicke Blechstärken angepasst werden. Die Geometrie bietet die Möglichkeit, dass die Gefahr des Durchschweißens bei dünnen Blechen verhindert wird.

Gemäß der Erfindung sind die Vorsprünge in parallelen Reihen angeordnet und durch zwei Gruppen von sich schneidenden Rillen getrennt. Zwei Vorsprünge sind eindeutig abgegrenzt und die Form solcher Abtrennungen kann ohne großen Aufwand hergestellt werden.

In einer bevorzugten Ausführungsform bildet die Schweißoberfläche eine Ausbuchtung aus und die Vorsprünge sind auf der Ausbuchtung angeordnet. Die Vorsprünge erstrecken sich über einen begrenzten Bereich, was das Schweißen des Schweißelements vereinfacht.

In einer weiteren bevorzugten Ausführungsform weist die Ausbuchtung einen kreisförmigen Querschnitt auf. Die Ausbuchtung ist auf der Längsachse zentriert.

In einer besonders bevorzugten Ausführungsform weist jeder Vorsprung eine pyramidenartige Form mit einer quadratischen Grundfläche auf. Die Form des Vorsprungs ermöglicht eine gute und gezielte Schmelzung. Des Weiteren ist die Form des Vorsprungs einfach, herzustellen insbesondere durch Prägung. In einer anderen Ausführungsform können Noppen oder kegelförmige Erhebungen vorgesehen sein.

In einer besonders bevorzugten Ausführungsform weist jeder Vorsprung vier ebene Mantelflächen auf, und zwei gegenüberliegende Mantelflächen sind durch einen Winkel zwischen 75 und 85 Grad eingeschlossen. Ein solcher Winkel erlaubt eine gute und gezielte Anschmelzung.

Gemäß einer weiteren bevorzugten Ausführungsform sind die Spitzen von zwei nebeneinanderliegenden Vorsprüngen (26) zwischen 0.5 Millimeter und 2.0 Millimeter voneinander entfernt. Diese Entfernung erlaubt ein gutes Zünden aller Spitzen und ein regelmäßiges Schmelzen auf der gesamten Schweißoberfläche.

In einer besonders bevorzugten Ausführungsform werden die Vorsprünge bei der Formung des Schweißelements durch ein geeignetes Kaltformverfahren hergestellt. Es ist kein weiterer Schritt zum Herstellen der Vorsprünge nötig. Die Vorsprünge sind mit dem Kopf einstückig.

Ferner wird die obige Aufgabe gelöst durch ein Schweißverfahren zum Verbinden eines Schweißelements mit einem Werkstück, das folgende Schritte aufweist:
- Bereitstellen eines Schweißelements wie oben beschrieben,
- Bereitstellen eines Werkstücks mit einer ersten und einer zweiten Oberfläche und einer Blechstärke,
- Bereitstellen eines Schweißgeräts,
- Anordnen der Schweißoberfläche des Schweißelements auf der ersten Oberfläche des Werkstücks,
- Ansteuern des Schweißgeräts in Abhängigkeit der Blechstärke,
- Schweißen des Schweißelements mit dem Werkstück durch Schmelzen von mindestens einem Teil der Vorsprünge und Andrücken des Schweißelements gegen das Werkstück.

In einer besonders bevorzugten Ausführungsform weisen die Vorsprünge entlang der Längsachse eine Vorsprungshöhe auf, die abhängig von der Blechstärke ist.

In einer besonders bevorzugten Ausführungsform ist das Werkstück mit einer Zinkschicht auf seiner zweiten Oberfläche vorgesehen. Durch ein solches Verfahren wird die Zinkschicht auf der Rückseits des Grundmaterials nur minimal beeinflusst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Beschreibung der begleitenden Zeichnungen

Ausführungsbeispiele der Erfindung sind in den Zeichnungen dargestellt und werden in der nachfolgenden Beschreibung näher erläutert. Es zeigen:
Fig. 1 eine perspektivische schematische Ansicht eines erfindungsgemäßen Schweißelements mit einem Kopf und einem Ankerabschnitt, wobei der Kopf eine erste Oberflächenstruktur hat;
Fig. 2 eine Seitenansicht des Schweißelements aus Fig. 1;
Fig. 3 eine Draufsicht der Oberflächenstruktur des Schweißelements aus Fig. 1;
Fig. 4 eine Längsschnittdarstellung einer Ausführungsform eines erfindungsgemäßen Schweißelements, angeordnet auf einer Oberfläche eines Werkstückes und mit einem schematischen Schweißgerät;
Fig. 5 eine Seitenansicht eines Schweißelements gemäß einer weiteren Ausführungsform.

### Detaillierte Beschreibung bevorzugter Ausführungsformen der vorliegenden Erfindung

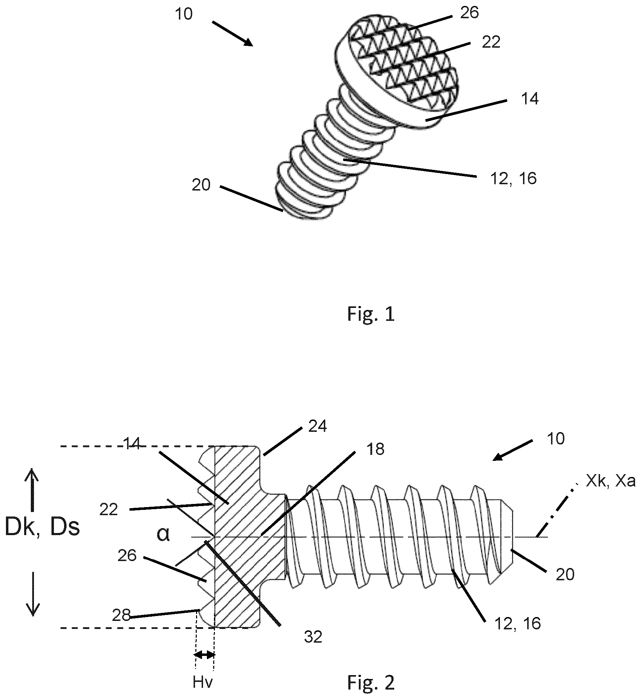

Fig. 1 zeigt ein als Schweißbolzen ausgebildetes Schweißelement 10 mit einem schaftförmigen Ankerabschnitt 12 und einem Kopf 14 (oder Bolzenkopf).

Der schaftförmige Ankerabschnitt 12 weist einen Grundkörper 16, einen ersten und einen zweiten Endbereich 18, 20 auf.

Der Grundkörper 16 erstreckt sich entlang einer Längsachse Xa zwischen dem ersten Endbereich 18 und dem zweiten Endbereich 20. Der Grundkörper 16 des Ankerabschnitts 12 kann jeweils die gewünschte Schaftform annehmen. Wie in Fig. 1, Fig. 2 und Fig. 4 dargestellt, kann der Grundkörper 16 einen kreisförmigen Querschnitt haben, im Wesentlichen konstant über seine Länge. In anderen Ausführungsformen könnte der Ankerabschnitt auch einen rechteckigen, dreieckigen oder trilobularen Querschnitt haben. Ebenfalls in anderen Ausführungsformen könnte der Grundkörper 16 nicht konstant über seine Länge sein.

Das in Fig. 1 gezeigte Schweißelement 10 ist vorteilhaft ein im Wesentlichen zylindrisches Verbindungselement, dessen Ankerabschnitt 12 ein Gewinde aufweist. Bezüglich des Schweißelements 10 gemäß den Fig. 1 und Fig. 2 sei also darauf hingewiesen, dass die hier dargestellten Schweißbolzen an ihren Ankerabschnitten 12 jeweils mit Gewinde versehen sind, womit nur angedeutet werden soll, dass nach dem Schweißen die betreffenden Schweißbolzen natürlich zum Anschrauben irgendeines weiteren Bauteils oder für sonstige Zwecke mit einer Verschraubung versehen sein können. Verschiedene Gewindeformen und Gewindemaße können vorgesehen sein.

Der zweite Endbereich 20 des Ankerabschnitts 12 ist vorzugsweise rund, aber es könnte auch andere Formen von Endbereichen vorgesehen sein. Zum Beispiel kann der zweite Endbereich mit geschnittener Kante vorgesehen sein.

Der Kopf 14 erstreckt sich von dem ersten Endbereich 18. Der Kopf 14 ist beispielsweise kreisförmig und konzentrisch zu einer Kopfachse Xk ausgerichtet. Beispielsweise fallen die Kopfachse Xk und Längsachse Xa zusammen. Der Kopf 14, welcher vorteilhaft in Form einer Scheibe (oder eines Flanschs) ausgestaltet ist, weist eine Schweißoberfläche 22 und eine zu der Schweißoberfläche 22 abgewandte Haltoberfläche 24 auf. Die Entfernung entlang der Längsachse Xa zwischen der Schweißoberfläche 22 und der Haltoberfläche 24 bildet die Dicke des Kopfes 14. Je größer die Entfernung ist, desto dicker ist der Kopf. Der erste Endbereich 18 des Ankerabschnitts 12 ist mit der Haltoberfläche 24 verbunden. Der Kopf 14 besitzt auf seiner dem Ankerabschnitt 12 abgewandten Seiten die Schweißoberfläche 22.

Die Schweißoberfläche 22 erstreckt sich beispielsweise in einer Ebene (oder ist ziemlich flach). In einer anderen Ausführungsform kann die Schweißoberfläche 22 zwei Schweißabschnitte haben, die zusammen einen Winkel von 7 Grad oder 9 Grad ausbilden.

Die Haltoberfläche 24 weist beispielsweise wie in Fig. 2 dargestellt einen Kopfdurchmesser Dk auf, der größer als der des Ankerabschnitts ist. Die Schweißoberfläche kann auch kreisförmig sein und einen Schweißdurchmesser Ds aufweisen. Der Kopfdurchmesser Dk und der Schweißdurchmesser Ds können zusammenfallen, wie in Fig. 2 dargestellt.

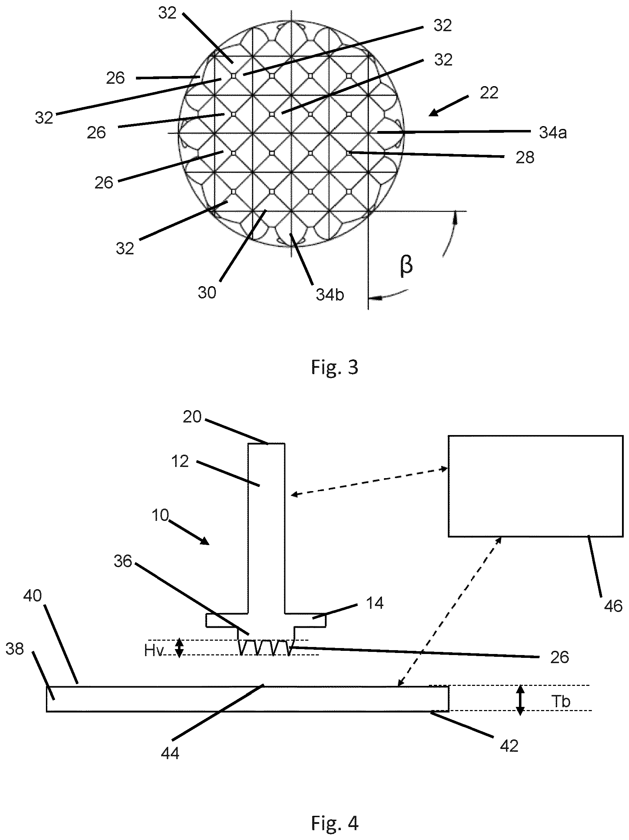

In einer anderen Ausführungsform kann der Kopfdurchmesser Dk größer als der Schweißdurchmesser Ds sein, wie in Fig. 4 dargestellt. Die Schweißoberfläche 22 kann in diesem Fall zentriert auf der Haltoberfläche 24 vorgesehen sein.

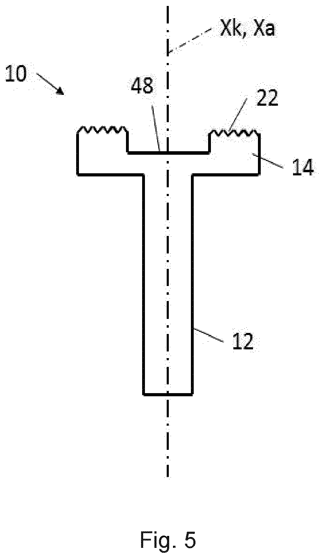

Wie in Fig. 5 dargestellt, kann in einer anderen Ausführungsform die Schweißoberfläche 22 ringförmig sein, und einen Kranz ausbilden, so dass die Halteoberfläche eine Ausnehmung 48 aufweist, die konzentrisch zu der Kopfachse Xk ausgerichtet ist.

Wie aus Fig. 1, Fig. 2, Fig. 3, Fig. 4 und Fig. 5 erkennbar, ist die Schweißoberfläche 22 des Kopfes 14 nicht plan, sondern mit mehreren Vorsprüngen 26 versehen.

Insbesondere soll unter einem "Vorsprung" ein von der Schweißoberfläche 22 vorragender Kopfabschnitt oder Kopfteil verstanden werden, wie beispielsweise eine Erhebung, ein Buckel, usw.

Die Vorsprünge 26 sind spitzförmig. Unter dem Begriff "spitzförmig" soll eine Form, die eine Kante, einen Zipfel oder ein Eck ausbildet, verstanden werden. Die Spitze 28 des Vorsprungs 26 kann scharf oder rund sein. Vorzugsweise werden die Spitzen 28 des Vorsprungs 26 rund sein, um die Lagerung und den Transport zu vereinfachen. Insbesondere beschädigen die Schweißelemente mit runder Spitze die Verpackungen für Ihren Transport nicht. Die Spitze bildet ein freies Ende des Vorsprungs. Der Vorsprung erstreckt sich entlang der Längsachse Xa von der Spitze bis zu einer Grundfläche 30, die auf einem Sockel des Kopfs liegt. Der Sockel ist breiter als die Spitze.

Die Vorsprünge 26 sind aus im elektrischen Lichtbogen schmelzbarem Material.

Die Vorsprünge 26 sind auf der Schweißoberfläche 22 regelmäßig verteilt angeordnet. Jeder Vorsprung 26 weist beispielsweise eine im wesentlichen pyramidenartige Form mit einer quadratischen Grundfläche 30 und vier im wesentlichen ebenen Mantelflächen 32 auf, die die Spitze 28 ausbilden. Die vier Mantelflächen 32 konvergieren, um die Spitze 28 auszubilden.

Vorzugsweise sind zwei gegenüberliegende Mantelflächen 32 durch einen Winkel α zwischen 70 und 90 Grad, insbesondere zwischen 75 und 85 Grad eingeschlossen. Zwei gegenüberliegenden Mantelflächen 32 können durch einen Winkel α von ca. 80 Grad eingeschlossen sein. Ein solcher Winkel erlaubt eine gute Verteilung der Vorsprünge und gleichzeitig eine einfache Herstellbarkeit des Schweißelements (bzw. der Schweißoberfläche).

Der Winkel α zwischen zwei gegenüberliegenden Mantelflächen 32 eines Vorsprungs 26 kann gleich oder anders sein als der Winkel α zwischen den zwei anderen gegenüberliegenden Mantelflächen 32. Der Abstand zwischen zwei nebeneinanderliegenden Vorsprüngen 26 (insbesondere zwischen zwei Spitzen 28 von zwei nebeneinanderliegenden Vorsprüngen 26) kann zwischen 0.5 Millimeter (mm) und 2.0 Millimeter (mm) sein.

In einer anderen Ausführungsform (nicht dargestellt) weist jeder Vorsprung Noppen oder kegelförmige Erhebungen.

Jeder Vorsprung 26 weist eine Vorsprungshöhe Hv entlang der Längsachse Xa auf. Die Vorsprungshöhe Hv von allen Vorsprüngen 26 kann gleich sein. In einer anderen Ausführungsform weisen die Vorsprünge 26 verschiedene Vorsprungshöhen Hv auf. Beispielsweise können die Vorsprunghöhen Hv zwischen 0.2 und 1.1 Millimeter (mm) sein, und insbesondere zwischen 0.3 und 1.0 Millimeter (mm). Die Vorsprungshöhen Hv kann vorzugsweise 0.3 Millimetern sein.

Die Vorsprünge 26 sind in parallelen Reihen ausgerichtet, wie in Fig. 3 dargestellt. Die Vorsprünge 26 werden durch zwei Gruppen von sich schneidenden Rillen 34a, 34b (oder Linien) getrennt. Die erste Gruppe von Rillen 34a (bzw. Linien) kann beispielsweise orthogonal zu der zweiten Gruppe von Rillen 34b (bzw. Linien) sein. In einer anderen Ausführungsform kann die erste Gruppe von Rillen 34a (bzw. Linien) mit der zweiten Gruppe von Rillen 34b einen Winkel β von mehr oder weniger als 90 Grad ausbilden.

Im Wesentlichen bilden die Vorsprünge 26 ein "Waffelformmuster" aus. Die Vorsprünge 26 können in verschiedenen Steigungen, Tiefen und Bahnen ausgerichtet sein.

Die Schweißoberfläche 22 bildet beispielsweise eine Ausbuchtung 36 aus, und die Vorsprünge 26 können auf der Ausbuchtung 36 angeordnet sein. Zum Beispiel weist die Ausbuchtung 36 einen kreisförmigen Querschnitt auf. Die Ausbuchtung 36 kann auf der Längsachse Xa zentriert angeordnet sein.

In einer anderen Ausführungsform weist das Schweißelement 10 keine Ausbuchtung auf und die Schweißoberfläche 22 bildet eine flache Ebene aus, die gegenüber der Haltoberflächen liegt.

In einer weiteren Ausführungsform ist die Schweißoberfläche 22 ringförmig und die Vorsprünge 26 bilden einen Kranz um die Kopfachse Xk.

Das Schweißelement 10 ist aus einem einzigen Material. Das Schweißelement 10 ist vorzugsweise aus Stahl oder Edelstahl. Andere Metalle wie zum Beispiel Aluminium oder andere Materialien können ebenfalls benutzt werden. Das Schweißelement 10 ist beispielsweise durch Kaltumformung hergestellt und die Vorsprünge 26 werden während der Kaltumformung hergestellt. Die Vorsprünge sind beispielsweise durch Prägung ausgebildet.

Das Schweißelement kann in mehreren Schritten hergestellt werden. Zum Beispiel wird in einem ersten Schritt die Oberfläche fließgepresst. In einem zweiten Schritt kann ein Pressen auf den Schweißdurchmesser durchgeführt werden. In einem dritten Schritt kann das "Waffelformmuster" (oder die Vorsprünge 26), beispielsweise mit Prägestift, gepresst werden.

Das Schweißelement 10 ist einstückig bzw. monolithisch ausgebildet, sodass insbesondere der Ankerabschnitt 12 und auch der Kopf 14 mit den entsprechenden Vorsprüngen 26 aus einem Bauteil (bzw. Werkstück) hergestellt werden, um das Schweißelement 10 zu bilden.

In anderen Ausführungsformen könnte das Schweißelement 10 mehrteilig sein.

Das Schweißelement 10 ist geeignet, um mit einem Werkstück 38 durch ein Schweißverfahren (insbesondere durch Lichtbogenschweißen) verbunden zu werden. Das Werkstück 38 ist beispielsweise ein Karrosserieblech und weist eine erste Oberfläche 40, eine zweite Oberfläche 42 und eine Blechstärke Tb auf. Das Werkstück 38 kann aus verschiedenen schweißbaren Materialen, wie Metall oder Legierungen, oder anderen bestehen.

Die erste Oberfläche 40 weist einen Verbindungsabschnitt 44 auf. Eine Zinkschicht (oder andere Oberflächenschicht wie Lackierungsschicht, Korrosionsschutzschicht, ...) kann beispielsweise auf der zweiten Oberfläche 42 des Werkstückes 38 vorgesehen sein.

In einem ersten Schritt wird das Schweißelement 10 im Bereich des Verbindungsabschnitts 44 angeordnet. Dabei treten die Vorsprünge 26 und insbesondere eine (distale) Spitze 28 der Vorsprünge 26 mit dem Verbindungsabschnitt 44 des Werkstückes 38 zumindest abschnittsweise in Kontakt. Die Kontaktzone zwischen dem Werkstück und dem Schweißelement, die durch die Spitze 28 entsteht ist jedoch auf mehrere Punktkontakte verteilt und nicht kontinuierlich. Dies erlaubt eine bessere Verteilung der Druckkraft auf die gesamte Schweißoberfläche während dem Aufsetzen des Schweißelements 10 auf das Werkstück 38. Der Ankerabschnitt 12 erstreckt sich von der Haltoberfläche 24 des Kopfes 14 des Schweißelements 10 weg.

Das Schweißelement 10 sowie das Werkstück 38 sind jeweils über Stromleitungen mit einer Stromquelle verbunden, um mit elektrischem Strom beaufschlagt zu werden. Bei einer Anordnung bzw. Kontaktierung der Vorsprünge 26 mit dem Verbindungsabschnitt 44 des Werkstücks 38 entsteht dann ein geschlossener Stromkreis, durch welchen ein Lichtbogen ausgebildet werden kann. In solchen Schweißverfahren werden ein Vorstrom und ein Hauptstrom benutzt. Die für das Schweißverfahren notwendige Spannung hängt von dem Materialen des Schweißelements, des Werkstücks 38 und von der Größe der Elemente ab.

Zuerst erfolgt das Aufsetzen des Schweißelements 10 auf das Werkstück 38 erfolgt anfänglich. Mit dem Aufsetzen (oder danach) wird der Vorstrom gezündet. Die unmittelbare Kontaktzone zwischen Schweißelement 10 und Werkstück 38 (d.h. die Kontaktzone zwischen Spitze 28 und Werkstück 38) erwärmt sich infolge des Stromflusses. Dann wird der Hauptstrom gezündet, um die Schmelzphase zu beginnen. Dies bereitet die Fügezone vor. Das Schweißelement wird gegen das Werkstück 38 gedruckt. Die Verbindung erfolgt durch Kristallisation der gemeinsamen Schmelze.

Mit der Geometrie der Schweißoberfläche 22 (d.h. mit den Vorsprüngen) wird eine Erweiterung des Schweißbereiches ausgebildet. Die Vorsprünge erlauben eine gute Verteilung der Schweißenergie auf die gesamte Schweißoberfläche. Durch die Form wird das Anschmelzen sich von der Spitze des Vorsprungs bis zur Grundfläche verbreiten. Die Form der Vorsprünge erlaubt eine regelmäßige Verbreitung der Anschmelzung auf die gesamte Schweißoberfläche und eine ziemlich konstante Anschmelztiefe des Kopfes. Insbesondere am Anfang des Schweißverfahrens werden die Spitzen anschmelzen. Dann wird die Schweißenergie sich in den Vorsprüngen entlang der Längsachse Xa in Richtung der Haltoberfläche verteilen. Die Anschmelzung verbreitet sich entlang der Längsachse Xa auf die gesamte Schweißoberfläche bis zu der flachen Ebene, auf welcher die Grundflächen der Vorsprünge angeordnet sind. Die regelmäßigen verteilten spitzförmigen Vorsprünge sichern ein stabiles Lichtbogenbrennen auf der Schweißoberfläche. Eine unkontrollierte Lichtbogenwanderung nach außen wird somit vermieden.

Das Schweißverfahren (insbesondere die Parameter des Schweißverfahrens wie beispielsweise die benötige Energie, und Verfahrensdauer) kann so gewählt werden, dass nur die Spitzen 28 (oder eine bestimmte Vorsprüngshöhe Hv) des Vorsprunges 26 zum Schmelzen gebracht werden. Dies kann ausreichend sein, um eine Fügeverbindung zwischen Schweißelement 10 (bzw. Schweißbolzen) und Werkstück 38 mit dünner Blechstärke ohne Durchschweißen herzustellen. Das Schweißverfahren (insbesondere die Parameter des Schweißverfahrens wie beispielsweise die benötige Energie und Verfahrensdauer) kann auch so gewählt werden, dass die gesamten Vorsprünge 26 und ein Teil des Sockels zum Schmelzen gebracht werden. Insbesondere die Tiefe des Sockels, die angeschmolzen wird, ist von der Blechstärke abhängig.

Die Stärke des Bleches kann beispielsweise zwischen 0,5 und 3 Millimeter sein. Beispielsweise kann die Stärke des Bleches zwischen 0,5 und 2 Millimeter. Dünne Bleche haben vorzugsweise eine Stärke zwischen 0.5 und 0.7 Millimetern. Dicke Bleche haben eine Stärke vorzugsweise zwischen 0.8 und 2 Millimetern. Beim Schweißen von dicken Materialen (Blechen) wird die Prozessenergie erhöht bzw. die Schweißzeit verlängert, um eine ausreichende Anschmelzung der Fügepartner zu erzielen und somit eine zufriedenstellende Verbindung zu generieren.

Eine Steuereinrichtung ist vorgesehen, um die Parametern des Schweißverfahrens automatisch je nach Stärke des Werkstücks 38 zu steuern. Insbesondere wird die Stärke des Werkstücks 38 durch einen Sensor gemessen und wird die Spannung eines Schweißgeräts 46 durch die Steuereinrichtung so gesteuert, dass ein Durchschweißen des Werkstücks vermieden und das Schweißen optimiert wird.

## Patentansprüche

1. Schweißelement (10), welches geeignet ist, unter Verwendung eines Lichtbogenschweißverfahrens mit einem Werkstück verbunden zu werden, aufweisend:
- einen Kopf (14) 14 mit einer Schweißoberfläche (22) und einer zu der Schweißoberfläche (22) abgewandten Haltoberfläche (24),
- einen schaftförmigen Ankerabschnitt (12), welcher sich zwischen einem ersten Endbereich (18) und einem zweiten Endbereich (20) entlang einer Längsachse (Xa) erstreckt, wobei der erste Endbereich (18) mit der Haltoberfläche (24) verbunden ist,
wobei die Schweißoberfläche (22) mehrere regelmäßige auf die gesamte Schweißoberfläche (22) verteilte spitzförmige Vorsprünge (26) aufweist,
**dadurch gekennzeichnet, dass**
die Vorsprünge (26) in parallelen Reihen ausgerichtet sind, wobei die Vorsprünge (26) durch zwei Gruppen von sich schneidenden Rillen (34a, 34b) getrennt sind, und
wobei das Schweißelement (10) aus einem einzigen Material ist, wobei das Material ein durch elektrischen Lichtbogen schmelzbares Material ist,
so dass ein stabiles Lichtbogenbrennen auf der Schweißoberfläche gesichert wird.

2. Schweißelement (10) nach Anspruch 1, wobei die Schweißoberfläche (22) eine Ausbuchtung (36) ausbildet, und wobei die Vorsprünge (26) auf der Ausbuchtung (36) angeordnet sind.

3. Schweißelement (10) nach Anspruch 2, wobei die Ausbuchtung (36) einen kreisförmigen Querschnitt aufweist, und wobei die Ausbuchtung (36) auf der Längsachse (Xa) zentriert ist.

4. Schweißelement (10) nach einem der Ansprüche 1 bis 3, wobei jeder Vorsprung (26) eine pyramidenartige Form mit einer quadratischen Grundfläche aufweist.

5. Schweißelement (10) nach Anspruch 4, wobei jeder Vorsprung (26) vier ebene Mantelflächen aufweist, die eine Spitze (28) des Vorsprungs (26) ausbilden, und wobei zwei gegenüberliegende Mantelflächen (32) durch einen Winkel (α) zwischen zwei zwischen 75 und 85 Grad eingeschlossen sind.

6. Schweißelement (10) nach einem der Ansprüche 1 bis 5, wobei die Vorsprünge (26) eine Vorsprunghöhe (Hv) zwischen 0.3 und 1.0 Millimeter (mm) aufweisen.

7. Schweißelement (10) nach einem der Ansprüche 1 bis 6, wobei die Spitze von zwei nebeneinanderliegenden Vorsprüngen (26) zwischen 0.5 Millimeter und 2.0 Millimeter voneinander entfernt sind.

8. Schweißverfahren zum Verbinden eines Schweißelements (10) mit einem Werkstück (38), mit folgenden Schritten:
- Bereitstellen eines Schweißelements (10) gemäß einem der vorangegangenen Ansprüche 1 bis 7,
- Bereitstellen eines Werkstücks (38) mit einer ersten und einer zweiten Oberfläche (40, 42) und einer Blechstärke (Tb),
- Bereitstellen eines Schweißgeräts (46),
- Anordnen der Schweißoberfläche (22) des Schweißelements (10) auf der ersten Oberfläche (40) des Werkstücks (38),
- Ansteuern des Schweißgeräts (46) in Abhängigkeit der Blechstärke (Tb),
- Schweißen des Schweißelements (10) mit dem Werkstück (38) durch Lichtbogenschweißen und durch Schmelzen von mindestens einem Teil der Vorsprünge (26) und Andrücken des Schweißelements gegen das Werkstück.

9. Schweißverfahren nach Anspruch 8, wobei die Vorsprünge (26) entlang der Längsachse (Xa) eine besondere Vorsprunghöhe (Hv) aufweisen, wobei die zu schmelzende Vorsprunghöhe (Hv) in Abhängigkeit der Blechstärke (Tb) bestimmt ist.

10. Schweißverfahren nach Anspruch 8 oder Anspruch 9, wobei das Werkstück (38) mit einer Zinkschicht auf seiner zweiten Oberfläche (42) vorgesehen ist.

## Claims

1. Welding element (10) which is suitable for being connected to a workpiece using an arc welding method, having:
- a head (14) with a welding surface (22) and a stop surface (24) facing away from the welding surface (22),
- a shaft-shaped anchor section (12) which extends between a first end region (18) and a second end region (20) along a longitudinal axis (Xa), wherein the first end region (18) is connected to the stop surface (24),
wherein the welding surface (22) has a plurality of regular, pointed projections (26) distributed over the entire welding surface (22),
**characterized in that**
the projections (26) are aligned in parallel rows, wherein the projections (26) are separated by two groups of intersecting grooves (34a, 34b), and
wherein the welding element (10) is made of a single material, wherein the material is a material that can be melted by electric arc,
so that stable arc burning is ensured on the welding surface.

2. Welding element (10) according to claim 1, wherein the welding surface (22) forms a bulge (36), and wherein the projections (26) are arranged on the bulge (36).

3. Welding element (10) according to claim 2, wherein the bulge (36) has a circular cross-section, and wherein the bulge (36) is centered on the longitudinal axis (Xa).

4. Welding element (10) according to any one of claims 1 to 3, wherein each projection (26) has a pyramidal shape with a square base.

5. Welding element (10) according to claim 4, wherein each projection (26) has four flat lateral surfaces which form a point (28) of the projection (26), and wherein two opposite lateral surfaces (32) are included at an angle (a) between two between 75 and 85 degrees.

6. Welding element (10) according to any one of claims 1 to 5, wherein the projections (26) have a projection height (Hv) of between 0.3 and 1.0 millimeters (mm).

7. Welding element (10) according to any one of claims 1 to 6, wherein the points of two adjacent projections (26) are spaced apart from one another by between 0.5 millimeters and 2.0 millimeters.

8. Welding method for connecting a welding element (10) to a workpiece (38), comprising the following steps:
- providing a welding element (10) according to any one of the preceding claims 1 to 7,
- providing a workpiece (38) with a first and a second surface (40, 42) and a sheet thickness (Tb),
- providing a welding device (46),
- arranging the welding surface (22) of the welding element (10) on the first surface (40) of the workpiece (38),
- controlling the welding device (46) depending on the sheet thickness (Tb),
- welding the welding element (10) to the workpiece (38) by arc welding and by melting at least a part of the projections (26) and pressing the welding element against the workpiece.

9. Welding method according to claim 8, wherein the projections (26) have a specific projection height (Hv) along the longitudinal axis (Xa), wherein the projection height (Hv) to be melted is determined depending on the sheet thickness (Tb).

10. Welding method according to claim 8 or claim 9, wherein the workpiece (38) is provided with a zinc layer on its second surface (42).

## Revendications

1. Élément de soudage (10), lequel est adapté pour être connecté à une pièce en utilisant un procédé de soudage à l'arc, présentant :
- une tête (14) avec une surface de soudage (22) et surface de support (24) opposée à la surface de soudage (22),
- une section d'ancrage en forme de tige (12), laquelle s'étend entre une première zone d'extrémité (18) et une seconde zone d'extrémité (20) le long d'un axe longitudinal (Xa), dans lequel la première zone d'extrémité (18) est connectée à la surface de support (24),
dans lequel la surface de soudage (22) présente plusieurs saillies pointues (26) réparties régulièrement sur l'ensemble de la surface de soudage (22),
**caractérisé en ce que**
les saillies (26) sont alignées en rangées parallèles, dans lequel les saillies (26) sont séparées par deux groupes de rainures se coupant (34a, 34b), et
dans lequel l'élément de soudage (10) est constitué d'un seul matériau, dans lequel le matériau est un matériau fusible par arc électrique,
de sorte qu'un arc électrique stable est assuré sur la surface de soudage.

2. Élément de soudage (10) selon la revendication 1, dans lequel la surface de soudage (22) forme une courbure (36), et dans lequel les saillies (26) sont disposées sur la courbure (36).

3. Élément de soudage (10) selon la revendication 2, dans lequel la courbure (36) présente une section transversale circulaire, et dans lequel la courbure (36) est centrée sur l'axe longitudinal (Xa).

4. Élément de soudage (10) selon l'une quelconque des revendications 1 à 3, dans lequel chaque saillie (26) présente une forme pyramidale avec une surface de base carrée.

5. Élément de soudage (10) selon la revendication 4, dans lequel chaque saillie (26) présente quatre surfaces d'enveloppe planes qui forment une pointe (28) de la saillie (26), et dans lequel deux surfaces d'enveloppe opposées (32) sont délimitées par un angle (α) entre 75 et 85 degrés.

6. Élément de soudage (10) selon l'une quelconque des revendications 1 à 5, dans lequel les saillies (26) présentent une hauteur de saillie (Hv) entre 0,3 et 1,0 millimètre (mm).

7. Élément de soudage (10) selon l'une quelconque des revendications 1 à 6, dans lequel les pointes de deux saillies (26) adjacentes sont espacées entre 0,5 millimètre et 2,0 millimètres.

8. Procédé de soudage pour connecter un élément de soudage (10) à une pièce (38), avec les étapes suivantes :
- fourniture d'un élément de soudage (10) selon l'une quelconque des revendications précédentes 1 à 7,
- fourniture d'une pièce (38) avec une première et une seconde surface (40, 42) et une épaisseur de tôle (Tb),
- fourniture d'un appareil de soudage (46),
- agencement de la surface de soudage (22) de l'élément de soudage (10) sur la première surface (40) de la pièce (38),
- commande de l'appareil de soudage (46) en fonction de l'épaisseur de tôle (Tb),
- soudage de l'élément de soudage (10) à la pièce (38) par soudage à l'arc et par fusion d'au moins une partie des saillies (26) et pression de l'élément de soudage contre la pièce.

9. Procédé de soudage selon la revendication 8, dans lequel les saillies (26) présentent, le long de l'axe longitudinal (Xa), une hauteur de saillie (Hv) particulière, dans lequel la hauteur de saillie (Hv) à fondre est déterminée en fonction de l'épaisseur de tôle (Tb).

10. Procédé de soudage selon la revendication 8 ou la revendication 9, dans lequel la pièce (38) est prévue avec une couche de zinc sur sa seconde surface (42).
